# EUROPÄISCHE PATENTSCHRIFT

(11) **EP 4 541 693 B1**
(45) Veröffentlichungstag und Bekanntmachung des Hinweises auf die Patenterteilung: **09.09.2026**
(21) Anmeldenummer: 24186410.7
(22) Anmeldetag: 04.07.2024
(51) Int. Cl.: B62D 6/00

(54) **VERFAHREN ZUM BETREIBEN EINES STEER-BY-WIRE-LENKSYSTEMS EINES KRAFTFAHRZEUGS, STEER-BY-WIRE-LENKSYSTEM SOWIE KRAFTFAHRZEUG**
METHOD FOR OPERATING A STEER-BY-WIRE STEERING SYSTEM OF A MOTOR VEHICLE, STEER-BY-WIRE STEERING SYSTEM, AND MOTOR VEHICLE
PROCÉDÉ DE FONCTIONNEMENT D'UN SYSTÈME DE DIRECTION À COMMANDE PAR CÂBLE D'UN VÉHICULE AUTOMOBILE, SYSTÈME DE DIRECTION À COMMANDE PAR CÂBLE ET VÉHICULE AUTOMOBILE

(30) Priorität: 17.10.2023 DE 102023128436
(43) Veröffentlichungstag der Anmeldung: 23.04.2025
(73) Patentinhaber: AUDI AG, 85057 Ingolstadt (DE)
(72) Erfinder: Loos, Sebastian, 85049 Ingolstadt (DE); Schroeder, Richard, 85055 Ingolstadt (DE)

(56) Entgegenhaltungen:
- DE-A1- 102016 009 684

## Beschreibung

Die Erfindung betrifft ein Verfahren zum Betreiben eines Steer-by-wire-Lenksystems gemäß der im Oberbegriff des Patentanspruches 1 angegebenen Art, ein Steer-by-wire-Lenksystem nach Patentanspruch 6 sowie ein Kraftfahrzeug gemäß Patentanspruch 7.

Steer-by-wire-Lenksysteme sind aus dem Stand der Technik hinreichend bekannt und zeichnen sich insbesondere dadurch aus, dass eine Lenksäule nicht vorgesehen ist, d.h. die Lenkhandhabe und der Lenkgetriebe-Aktuator sind mechanisch voneinander entkoppelt und werden vollständig elektronisch über eine Kraft- und Wegansteuerung gesteuert. Für die elektronische Regelung/Steuerung weist das Lenksystem eine Regel-Steuereinheit auf, welche einen über einen Fahrer gegebenen Lenkwunsch bzw. Lenkbefehl erfasst und daraus ein Steuersignal zur Ansteuerung des Lenkgetriebe-Aktuators generiert. Um dem Fahrer haptische Rückmeldungen zu geben, ist der Lenkhandhabe zudem ein elektromechanischer Force-Feedback-Aktuator zugeordnet, der entsprechende haptische Rückmeldungen erzeugt. Die haptischen Rückmeldung sind eine Lenk-Rückmeldung, bei der die Lenkhandhabe in Abhängigkeit der auftretenden Lenkkräfte mit einem Lenkgegenmoment beaufschlagt wird, und eine Fahrbahn-Rückmeldung, die mit einer auf das Fahrzeug einwirkenden, fahrbahnseitigen Störanregung korreliert. Lediglich beispielhaft wird auf die DE 10 2015 005 020 A1 verwiesen.

Ein gattungsgemäßes Verfahren zum Betreiben eines Steer-by-wire-Lenksystems ist in der DE 10 2016 009 684 A1 offenbart.

Der Erfindung liegt die Aufgabe zugrunde, ein Verfahren zum Betreiben eines Steer-by-wire-Lenksystems eines Kraftfahrzeugs gemäß der im Oberbegriff des Patentanspruches 1 angegebenen Art derart weiterzubilden, dass ein seitens des Fahrers als unangenehm empfundenes Aufschwingen der Lenkhandhabe verhindert wird.

Diese Aufgabe wird durch die kennzeichnenden Merkmale des Patentanspruches 1 in Verbindung mit seinen Oberbegriffsmerkmalen gelöst.

Die Unteransprüche 2 bis 5 stellen vorteilhafte Weiterbildungen des erfindungsgemäßen Verfahrens dar.

Gemäß dem Verfahren zum Betreiben eines Steer-by-wire-Lenksystems wird in bekannter Art und Weise ein über eine Lenkhandhabe eingegebener Lenkbefehl erfasst, und es wird und mittels einer Regel-/Steuereinheit daraus ein Steuersignal zum Ansteuern eines von der Lenkhandhabe mechanisch entkoppelten Lenkgetriebe-Aktuator generiert. Zudem wird mittels der Regel/Steuereinheit ein Ansteuersignal für eine Anregung eines der Lenkhandhabe zugeordneten Force-Feedback-Aktuators zur Aufprägung von haptischen Rückmeldungen an der Lenkhandhabe generiert.

Erfindungsgemäß ist nunmehr vorgesehen, dass zumindest eine Eigenfrequenz der Lenkhandhabe bestimmt wird, und dass das mittels der Regel/Steuereinheit zu generierende Ansteuersignal zum Ansteuern des Force-Feedback-Aktuators so auf die bestimmte, zumindest eine Eigenfrequenz der Lenkhandhabe abgestimmt wird, das beim Aufprägen der haptischen Rückmeldungen durch den Force-Feedback-Aktuator, Anregungen, welche im Bereich der Eigenfrequenz der Lenkhandhabe liegen, unterbleiben.

Durch das erfindungsgemäße Verfahren ist nunmehr in vorteilhafter Weise gewährleistet, dass - da Anregungen im Bereich der Eigenfrequenz der Lenkhandhabe unterbleiben - ein Aufschwingen der Lenkhandhabe erfolgreich verhindert werden und damit für den Fahrer ein angenehmes Fahrgefühl vermittelt wird.

Ein weiterer Vorteil ist, dass das Verfahren lediglich eine entsprechende Ansteuerung des Force-Feedback-Aktuators benötigt, d.h. ein separater Schwingungstilger zur Dämpfung bzw. Vermeidung von Aufschwingungen der Lenkhandhabe ist nicht erforderlich.

Bevorzugt ist hierzu verfahrensgemäß vorgesehen, dass die aus fahrbahnseitigen und/oder kraftfahrzeugaufbauseitigen Störanregungen resultierenden bzw. erzwungenen Aufbauschwingungen des Kraftfahrzeugaufbaus erfasst und die den Aufbauschwingungen zugrunde liegenden Erregerfrequenzen ermittelt werden und dass solche Erregerfrequenzen, welche im Bereich der im Vorfeld bestimmten Eigenfrequenzen der Lenkhandhabe liegen, bestimmt werden.

Eine bevorzugt Ausführungsform des erfindungsgemäßen Verfahrens zeichnet sich dadurch aus, dass die so bestimmten Erregerfrequenzen, also die Frequenzen, welche im Bereich der Eigenfrequenz der Lenkhandhabe liegen, herausgefiltert werden, sodass diese bei der Generierung des Ansteuersignals bzw. für die Generierung des Ansteuersignals zur Ansteuerung des Force-Feedback-Aktuators unberücksichtigt bleiben. D.h., es werden potentielle, ein Aufschwingen der Lenkhandhabe begünstigende Frequenzen im Vorfeld herausgefiltert, mit dem Effekt, dass das Ansteuersignal entsprechende Frequenzen nicht aufweist. Somit ist in vorteilhafter Weise sichergestellt, dass mittels des Force-Feedback-Aktuators lediglich solche haptische Rückmeldungen aufgeprägt werden, welche nicht im Bereich der Eigenfrequenz der Lenkhandhabe liegen, und damit ein Aufschwingen der Lenkhandhabe nicht auftritt.

Alternativ oder kumulativ zur obigen Ausführungsform sieht eine andere Ausführungsform des erfindungsgemäßen Verfahren vor, dass das Ansteuersignal zur Ansteuerung des Force-Feedback-Aktuators so unter Berücksichtigung der im Vorfeld bestimmten Erregerfrequenzen generiert wird, dass mittels des Force-Feedback-Aktuators an der Lenkradhandhabe durch Aufprägen von zu den bestimmten Erregerfrequenzen gegenphasigen Schwingungen, Anregungen im Bereich der Eigenfrequenz der Lenkradhandhabe eliminiert werden. Mit anderen Worten, der Force-Feedback-Aktuator wirkt als Schwingungsdämpfungseinrichtung zur Dämpfung von im Bereich der Eigenfrequenz der Lenkhandhabe liegenden Frequenzen.

Bevorzugt werden die fahrbahnseitigen und/oder kraftfahrzeugaufbauseitigen Störanregungen des Kraftfahrzeugaufbaus mittels Sensoren erfasst.

Der Erfindung liegt des Weiteren die Aufgabe zugrunde ein Steer-by-wire-Lenksystem für ein Kraftfahrzeug anzugeben, welches ausgebildet ist - bei geringen Aufwand - ein unerwünschtes Aufschwingen der Lenkhandhabe zu verhindern.

Diese Aufgabe wird durch kennzeichnenden Merkmale des Patentanspruches 6 in Verbindung mit seinen Oberbegriffsmerkmalen gelöst.

Hierzu umfasst das Steer-by-wire-Lenksystem in bekannter Art und Weise eine Lenkhandhabe, einen Lenksensor zur Erfassung eines an der Lenkhandhabe getätigten Lenkbefehls, einen von der Lenkhandhabe mechanisch entkoppelten Lenkgetriebe-Aktuator, einen der Lenkhandhabe zugeordneten Force-Feedback-Aktuator sowie eine Regel-/Steuereinrichtung, die eingerichtet ist, aus dem erfassten Lenkbefehl ein Steuersignal für den Lenkgetriebe-Aktuator zu generieren und die eingerichtet ist, ein Ansteuersignal für den Force-Feedback-Aktuator zu Aufprägung von haptischen Rückmeldungen an der Lenkhandhabe zu generieren.

Das erfindungsgemäße Steer-by-wire-Lenksystem zeichnet sich dadurch aus, dass die Regel-/Steuereinheit ferner eingerichtet ist, ein Verfahren nach einem der Ansprüche 1 bis 5 auszuführen.

Da - wie bereits ausgeführt - bereits durch ein entsprechendes Ausführen des erfindungsgemäßen Verfahrens ein unerwünschtes Aufschwingen der Lenkhandhabe verhindert wird, sind in vorteilhafter Weise bei dem erfindungsgemäßen Steer-by-wire Lenksystem weitere Bauelemente, wie z.B. spezielle Lenkradtilger zum Tilgen bzw. Dämpfen unerwünschter Aufschwingungen, nicht erforderlich.

Der Erfindung liegt des Weiteren die Aufgabe zugrunde ein Kraftfahrzeug, welches ein Steer-by-wire-Lenksystem sowie zumindest einen Sensor zur Erfassung von fahrbahnseitigen und/oder kraftfahrzeugaufbauseitigen Störanregungen des Kraftfahrzeugaufbaus umfasst, derart weiterzubilden, dass im Fahrbetrieb das Auftreten von unerwünschten Aufschwingungen der Lenkhandhabe verhindert werden.

Diese Aufgabe wird dadurch gelöst, dass das Steer-by-wire-Lenksystem gemäß Patentanspruch 6 ausgebildet ist.

Sämtliche Ausführungen zu dem erfindungsgemäßen Steer-by-wire-Lenksystem sowie zu dem erfindungsgemäßen Verfahren zum Betreiben des Steer-by-wire-Lenksystems lassen sich analog auf das erfindungsgemäße Kraftfahrzeug übertragen, sodass mit diesem auch die zuvor genannten Vorteile erzielt werden.

Bevorzugt ist dabei der zumindest eine Sensor in Form eines Beschleunigungssensors ausgebildet. Da entsprechende Sensoren standardmäßig in Kraftfahrzeugen verbaut sind, ist hierdurch eine kostengünstige und aufwandsarme Implementierung der Funktion "Erfassung von fahrbahnseitigen und/oder kraftfahrzeugaufbauseitigen Störanregungen" ermöglicht. Denkbar ist aber auch, dass die benötigte Störanregung mittels eines Schätzers ermittelt wird.

## Patentansprüche

1. Verfahren zum Betreiben eines Steer-by-wire-Lenksystems eines Kraftfahrzeugs, gemäß dem ein über eine Lenkhandhabe eingegebener Lenkbefehl erfasst und mittels einer Regel-/Steuereinheit daraus ein Steuersignal für einen von der Lenkhandhabe mechanisch entkoppelten Lenkgetriebe-Aktuator generiert wird und gemäß dem mittels der Regel-/Steuereinheit ein Ansteuersignal für eine Anregung eines der Lenkhandhabe zugeordneten Force-Feedback-Aktuators zur Aufprägung von haptischen Rückmeldungen an der Lenkhandhabe generiert wird,
**dadurch gekennzeichnet, dass**
zumindest eine Eigenfrequenz der Lenkhandhabe bestimmt wird, und dass das mittels der Regel-/Steuereinheit zu generierende Ansteuersignal so auf die bestimmte, zumindest eine Eigenfrequenz abgestimmt wird, das Anregungen im Bereich der Eigenfrequenz der Lenkhandhabe unterbleiben.

2. Verfahren nach Anspruch 1,
**dadurch gekennzeichnet, dass**
fahrbahnseitige und/oder kraftfahrzeugaufbauseitige Störanregungen und sich hieraus ergebende Aufbauschwingungen des Kraftfahrzeugaufbaus erfasst und die den Aufbauschwingungen zugrunde liegenden Erregerfrequenzen ermittelt werden, und dass solche Erregerfrequenzen, welche im Bereich der Eigenfrequenz der Lenkradhandhabe liegen, bestimmt werden.

3. Verfahren nach Anspruch 2,
**dadurch gekennzeichnet, dass**
die bestimmten Erregerfrequenzen herausgefiltert werden, sodass diese bei der Generierung des Ansteuersignals für die Anregung des Force-Feedback-Aktuators unberücksichtigt bleiben.

4. Verfahren nach Anspruch 2,
**dadurch gekennzeichnet, dass**
das Ansteuersignal unter Berücksichtigung der bestimmten Erregerfrequenzen so generiert wird, dass mittels des Force-Feedback-Aktuators an der Lenkradhandhabe durch Aufprägen von zu den bestimmten Erregerfrequenzen gegenphasigen Schwingungen Anregungen im Bereich der Eigenfrequenz der Lenkhandhabe eliminiert werden.

5. Verfahren nach Anspruch 2,
**dadurch gekennzeichnet, dass**
die fahrbahnseitigen und/oder kraftfahrzeugaufbauseitigen Störanregungen des Kraftfahrzeugaufbaus mittels Sensoren erfasst werden.

6. Steer-by-wire Lenksystem für ein Kraftfahrzeug, umfassend eine Lenkhandhabe, einen Lenksensor zur Erfassung eines an der Lenkhandhabe getätigten Lenkbefehls, einen von der Lenkhandhabe mechanisch entkoppelten Lenkgetriebe-Aktuator, einen der Lenkhandhabe zugeordneten Force-Feedback-Aktuator sowie eine Regel-/Steuereinrichtung, die eingerichtet ist, aus dem erfassten Lenkbefehl ein Steuersignal für den Lenkgetriebe-Aktuator zu generieren und die eingerichtet ist, ein Ansteuersignal für den Force-Feedback-Aktuator zu Aufprägung von haptischen Rückmeldungen an der Lenkhandhabe zu generieren,
**dadurch gekennzeichnet, dass**
die Regel-Steuereinrichtung ferner eingerichtet ist, ein Verfahren nach einem der Ansprüche 1 bis 5 auszuführen.

7. Kraftfahrzeug, umfassend ein Steer-by-wire-Lenksystem sowie zumindest einen Sensor zur Erfassung von fahrbahnseitige und/oder kraftfahrzeugaufbauseitige Störanregungen des Kraftfahrzeugaufbaus,
**dadurch gekennzeichnet, dass**
das Steer-by-wire Lenksystem nach Anspruch 6 ausgebildet ist.

8. Kraftfahrzeug nach Anspruch 7,
**dadurch gekennzeichnet, dass**
das der Sensor in Form eines Beschleunigungssensors ausgebildet ist.

## Claims

1. Method for operating a steer-by-wire steering system of a motor vehicle, according to which a steering command entered via a steering handle is detected and a control signal for a steering gear actuator mechanically decoupled from the steering handle is generated therefrom by a regulation/control unit and according to which an actuation signal for an excitation of a force-feedback actuator assigned to the steering handle for applying haptic feedback signals on the steering handle is generated by the regulating/control unit,
**characterized in that**
at least one natural frequency of the steering handle is determined, and **in that** the actuation signal to be generated by means of the regulation/control unit is adapted to the determined at least one natural frequency in such a way that excitations in the range of the natural frequency of the steering handle are prevented.

2. Method according to claim 1,
**characterized in that**
disturbance excitations on the road side and/or on the vehicle body side and the resulting vibrations of the vehicle body are detected and the excitation frequencies on which the body vibrations are based are determined, and those excitation frequencies are determined which are in the range of the natural frequency of the steering wheel.

3. Method according to claim 2,
**characterized in that**
the determined excitation frequencies are filtered out so that they are not taken into account when generating the actuation signal for the excitation of the force feedback actuator.

4. Method according to claim 2,
**characterized in that**
the actuation signal is generated by taking into account the determined excitation frequencies in such a way that excitations in the range of the natural frequency of the steering handle are eliminated by the force feedback actuator on the steering wheel handle by applying vibrations in phase opposition to the determined excitation frequencies.

5. Method according to claim 2,
**characterized in that**
the disturbance excitations on the road side and/or on the vehicle body side are detected by sensors.

6. Steer-by-wire steering system for a motor vehicle, comprising a steering handle, a steering sensor for detecting a steering command applied to the steering handle, a steering gear actuator mechanically decoupled from the steering handle, a force feedback actuator associated with the steering handle and a regulation/control device, which is set up to generate a control signal for the steering gear actuator from the detected steering command and which is set up to generate an actuation signal for the force feedback actuator for applying haptic feedback to the steering handle,
**characterized in that**
the regulation and control device is furthermore configured to carry out a method according to any one of claims 1 to 5.

7. Motor vehicle, comprising a steer-by-wire steering system and at least one sensor for detecting disturbance excitations of the motor vehicle body on the road side and/or on the vehicle body side,
**characterized in that**
the steer-by-wire steering system is configured according to claim 6.

8. Motor vehicle according to claim 7,
**characterized in that**
the sensor is in the form of an acceleration sensor.

## Revendications

1. Procédé de fonctionnement d'un système de direction à commande par câble d'un véhicule à moteur, selon lequel un ordre de direction entré par le biais d'une manette de direction est détecté et un signal de commande pour un actionneur de mécanisme de direction découplé mécaniquement de la manette de direction est généré au moyen d'un dispositif de régulation/commande à partir de celui-ci et selon lequel un signal de commande pour une excitation d'un actionneur de retour de force associé à la manette de direction est généré au moyen du dispositif de régulation/commande pour imposer des retours haptiques sur la manette de direction,
**caractérisé en ce que**
au moins une fréquence propre de la manette de direction est déterminée et **en ce que** le signal de commande à générer au moyen du dispositif de régulation/commande est adapté à la au moins une fréquence propre déterminée de sorte que des excitations restent en dessous dans la plage de la fréquence propre de la manette de direction.

2. Procédé selon la revendication 1,
**caractérisé en ce que**
des excitations défaillantes côté chaussée et/ou côté carrosserie de véhicule automobile et des oscillations en résultant de la carrosserie de véhicule à moteur sont détectées et les fréquences d'excitation se trouvant à la base des oscillations de carrosserie sont déterminées et **en ce que** de telles fréquences d'excitation qui se trouvent dans la plage de la fréquence propre de la manette de volant sont déterminées.

3. Procédé selon la revendication 2,
**caractérisé en ce que**
les fréquences d'excitation déterminées sont filtrées de sorte que celles-ci restent ignorées pour la génération du signal de commande pour l'excitation de l'actionneur de force de retour.

4. Procédé selon la revendication 2,
**caractérisé en ce que**
le signal de commande est généré en tenant compte des fréquences d'excitation déterminées de sorte que des excitations dans la plage de la fréquence propre de la manette de direction soient éliminées au moyen de l'actionneur de force de retour sur la manette de volant par imposition d'oscillations en opposition de phase par rapport aux fréquences d'excitation déterminées.

5. Procédé selon la revendication 2,
**caractérisé en ce que**
les excitations défaillantes côté chaussée et/ou côté carrosserie de véhicule automobile de la carrosserie de véhicule automobile sont détectées au moyen de capteurs.

6. Système de direction à commande par câble pour un véhicule à moteur comprenant une manette de direction, un capteur de direction pour la détection d'un ordre de direction actionné au niveau de la manette de direction, un actionneur de mécanisme de direction découplé mécaniquement de la manette de direction, un actionneur de force de retour associé à la manette de direction ainsi qu'un dispositif de régulation/commande qui est conçu afin de générer un signal de commande pour l'actionneur de mécanisme de direction à partir de l'ordre de direction détecté et qui est conçu afin de générer un signal de commande pour l'actionneur de force de retour pour imposer les retours haptiques au niveau de la manette de direction,
**caractérisé en ce que**
le dispositif de régulation et de commande est de plus conçu afin d'exécuter un procédé selon l'une quelconque des revendications 1 à 5.

7. Véhicule à moteur comprenant un système de direction à commande par câble ainsi qu'au moins un capteur de détection d'excitations défaillantes de la carrosserie de véhicule automobile côté chaussée et/ou côté carrosserie de véhicule automobile,
**caractérisé en ce que**
le système de direction à commande par câble est réalisé selon la revendication 6.

8. Véhicule à moteur selon la revendication 7,
**caractérisé en ce que**
le capteur est réalisé sous la forme d'un capteur d'accélération.
